# EUROPEAN PATENT APPLICATION

(11) **EP 4 418 008 A2**
(43) Date of publication of application: **21.08.2024**
(21) Application number: 24157581.0
(22) Date of filing: 14.02.2024
(51) Int. Cl.: G01S 7/521, G01S 15/08, G01S 15/88

(54) **SENSOR APPARATUS**

(30) Priority: 20.02.2023 KR 20230022207; 22.01.2024 KR 20240009292
(71) Applicant: Autonics Corporation, Busan 48002 (KR)
(72) Inventor: KIM, Min Seok, Seoul 07594 (KR); LIM, Dong Kwan, Goyang-si, Gyeonggi-do 10310 (KR); SONG, Nak Won, Gimpo-si, Gyeonggi-do 10078 (KR)
(74) Representative: Frenkel, Matthias Alexander

(57) **Abstract**

A sensor apparatus according to an embodiment of the present disclosure includes a transducer defined as a detection signal transceiver that generates and receives a signal for detection; a main board electrically connected to the transducer and on which a control chip that interprets and processes signals transmitted from the transducer is mounted; a cover member accommodating the transducer; a case having one end connected to the cover member and accommodating a portion of the main board; a conductive shielding cylinder into which at least a portion of the main board is inserted through an opening at the upper end; and a bottom cushion placed at the lower end of the shielding cylinder, in which the bottom cushion includes a conductive layer that is in contact with the shielding cylinder and blocks noise from entering the shielding cylinder.

## Description

### The Background

### 1. The field

The present disclosure relates to a sensor apparatus.

### 2. Description of the related art

As an example of a sensor apparatus, an ultrasonic sensor is a sensor that generates a high frequency sound of about 20 kHz or higher and then measures the time difference between the generated high frequency sound and the sound reflected by an object and informing a distance or the presence of obstacle, and is being applied to various systems such as distance measurement systems, obstacle detection systems, and snow load detection systems.

These ultrasonic sensors have a structure that generates ultrasonic waves by applying voltage to a transducer and generates voltage by receiving sound waves that are reflected and returned from an object.

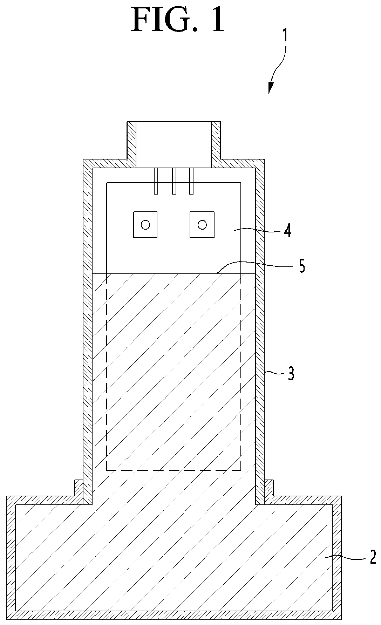

FIG. 1 is a cross-sectional view illustrating a conventional ultrasonic sensor.

Referring to FIG. 1, a conventional ultrasonic sensor 1 includes a housing 3, a transducer 2 accommodated inside the housing 3, a board 4, and a filler (5) filled inside the housing 3 and made of epoxy material.

As illustrated, after mounting the transducer 2 and the board 4 inside the housing 3, a filler made of epoxy material is filled inside the housing 3 to prevent water/dust and rotation of the board. At this time, the filler is filled to a level where not only the transducer 2 but also more than half of the board 4 is submerged.

When the filler 5 surrounds the board 4, there is a disadvantage that a separate UV-coating is required on the board 4 to prevent damage or defects in the devices mounted on the board 4 due to contraction and expansion of the filler.

In addition, even if there is no UV-coating on the inside, there are limitations in terms of design for a separate filling structure.

In addition, since the filler is structured to surround the circuit board and the housing is made of a single piece, there is a disadvantage that if a problem occurs with the circuit board, disassembly is impossible and the sensor itself has to be discarded.

In addition, as a method for shielding inverter noise generated from the transducer 2 from flowing into the board 4, conventionally, a thin sheet of copper material is wrapped around the transducer and connected to the transducer 2 or the board 4 by soldering.

In the case of this noise shielding structure, the lower end of the noise shielding sheet surrounding the board 4 is still open, so there is a problem of inverter noise flowing from the transducer 2 toward the board 4 through the open lower end.

### The Summary

The present disclosure is proposed to improve the above problems.

A sensor apparatus according to an embodiment of the present disclosure for achieving the above object includes a transducer (22) defined as a detection signal transceiver that generates and receives a signal for detection; a main board (34) electrically connected to the transducer (22) and on which a control chip that interprets and processes signals transmitted from the transducer (22) is mounted; a cover member (21,24) configured to accommodate the transducer (22); a lower housing (31) having one end which is connected to the cover member (21,24) and configured to accommodate a portion of the main board (34); an upper housing (32) configured to accommodate the remaining portion of the main board (34); and a coupler (33) configured to connect the other end of the lower housing and one end of the upper housing.

The sensor apparatus according to an embodiment of the present disclosure further comprises a filler (S) filled inside the cover member (21,24), wherein the filler (S) is filled at least to a height spaced apart from one end portion of the main board (34).

The sensor apparatus according to an embodiment of the present disclosure further comprises a gasket (25) interposed at a portion where the lower housing (31) and the cover member (21,24) are connected.

The sensor apparatus according to an embodiment of the present disclosure further comprises a cap bolt (23) configured to connect the cover member (21,24) and the lower housing (31).

The cover member (21,24) includes: a front cover (21) coupled to a front surface of the transducer (22); and a back cover (24) configured to accommodate the transducer (22) and having a front surface to which the front cover (21) is coupled, wherein the back cover (24) includes: a transducer accommodating part (241) configured to accommodate the transducer (22), a cap bolt accommodating part (242) extending from a rear surface of the transducer accommodating part (241) and configured to accommodate the cap bolt (23) therein; and a gasket seating part (243) extending from an inner circumferential surface of the cap bolt accommodating part (242) and having a rear surface on which the gasket (25) is placed.

The cap bolt (23) includes: a base (231) in close contact with a front surface of the gasket seating part (243); and a fastening sleeve (232) extending from a rear surface of the base (231), extending inside the cap bolt accommodating part (242), and having a thread (2321) formed on an outer circumferential surface.

The lower housing (31) includes: a lower housing body (311) with a hollow barrel shape, and an insert neck (313) extending from a front surface of the lower housing body (311) and having a thread (3131) formed on an inner circumferential surface, wherein the fastening sleeve (232) is inserted into an inner portion of the insert neck (313) and screwed to the insert neck (313).

The coupler (33) includes: a barrel-shaped coupler body (331); and a partition rib (338) configured to protrude and surround the outer circumferential surface of the coupler body (331), wherein one end of the upper housing (32) is in contact with one surface of the partition rib (338), and wherein the other end of the lower housing (31) is in contact with the other surface of the partition rib (338), and wherein the outer surface of the partition rib (338) is exposed to an outside.

The sensor apparatus according to an embodiment of the present disclosure further comprises at least one light emitting element (343) mounted on the main board (34), wherein the light emitted from the light emitting element (343) is emitted to the outside through an outer surface of the partition rib (338).

The sensor apparatus according to an embodiment of the present disclosure further comprises: a lower sealing (361) mounted on an outer circumferential surface of the coupler body (331) between the partition rib (338) and one end portion of the coupler body (331) and in close contact with an inner circumferential surface of the lower housing (31); and an upper sealing (362) mounted on the outer circumferential surface of the coupler body (331) between the partition rib (338) and the other end portion of the coupler body (331) and in close contact with an inner circumferential surface of the upper housing (32).

The sensor apparatus according to an embodiment of the present disclosure further comprises a connect plug (37) inserted into the other end of the upper housing (32); and one or more terminals soldered to the main board (34) through the connect plug (37), wherein the connect plug (37) includes: a plug body (371); a first seating rib (373) extending from one end portion of the plug body (371); and a second seating rib (374) extending from one end portion of the plug body (371) and formed opposite the first seating rib (373), and wherein the first seating rib (373) extends longer than the second seating rib (374).

A seating jaw (345,346) protrudes from the other end portion of the main board (34), wherein the seating jaw (345,346) includes: a first seating jaw (345) with which the first seating rib (373) is in contact, and a second seating jaw (346) with which the second seating rib (374) is in contact, and wherein the second seating jaw (346) protrudes longer than the first seating jaw (345).

The sensor apparatus according to an embodiment of the present disclosure further comprises a conductive shielding cylinder surrounding at least a portion of the main board, between the main board and the lower housing.

The sensor apparatus according to an embodiment of the present disclosure further comprises a conductive layer (402) electrically connected to the conductive shielding cylinder (35a), between the main board (34) and the transducer (22).

The sensor apparatus according to an embodiment of the present disclosure further comprises a board cushion (41) mounted on an inner lower end of the shield cylinder (35a), wherein the main board (34) includes ground terminals (341,342) electrically connected to the board cushion (41).

The sensor apparatus according to an embodiment of the present disclosure configured as described above has the following effects.

First, since the filler filled inside the housing does not fill the circuit board, there is an advantage that separate UV-coating is not required on the circuit board.

Second, since the minimum filling is done so that the filler only surrounds the transducer without covering the circuit board, damage or defects in components mounted on the circuit board can be minimized.

Third, since a guide structure is provided inside the housing to support the circuit board, there is an advantage that the circuit board is not only inserted into the correct position but also does not rotate due to external force.

Fourth, since the housing comprises two parts, a lower housing and an upper housing, and the upper housing can be separated to separate the circuit board, there is an advantage that the circuit board may be easily replaced or repaired.

Fifth, in order to shield noise penetrating toward the main board, the shielding cylinder surrounds the main board and a conductive cushion is placed at the lower end of the shielding cylinder, which has the advantage of maximizing the noise shielding effect.

Sixth, a conductive cushion is placed at the lower end of the shielding cylinder, a ground electrode is formed at the lower end of the main board, and the ground electrode is in contact with the conductive cushion, so that the main board and the shielding cylinder can conduct electricity, so that there is an advantage that there is no need to solder one end portion of the copper sheet forming the existing shield member to the main board.

Seventh, a waterproof seal is placed at the joint area between the back cover and the front cover, a waterproof tape is interposed at the contact area between the transducer and the front cover, and a pressurizing rib that presses the upper surface of the transducer is protruded from the inner circumferential surface of the back cover, so that there is an advantage of minimizing the possibility of foreign substances, including moisture, penetrating into the gap between the front cover and the back cover.

### Brief description of the drawings

FIG. 1 is a cross-sectional view illustrating a conventional ultrasonic sensor.
FIG. 2 is a front view illustrating a sensor apparatus according to an embodiment of the present disclosure.
FIG. 3 is an exploded perspective view illustrating the sensor apparatus.
FIG. 4 is a longitudinal cross-sectional view illustrating the sensor apparatus taken along line 4-4 in FIG. 2.
FIG. 5 is a longitudinal cross-sectional view illustrating the sensor apparatus taken along line 5-5 in FIG. 4.
FIG. 6 is a cross-sectional view illustrating the sensor apparatus taken along line 6-6 in FIG. 2.
FIG. 7 is a plan perspective view illustrating a coupler constituting a sensor apparatus according to an embodiment of the present disclosure.
FIG. 8 is a bottom perspective view illustrating the coupler.
FIG. 9 is a front perspective view illustrating the upper housing constituting the sensor apparatus according to an embodiment of the present disclosure.
FIG. 10 is a bottom perspective view illustrating the upper housing.
FIG. 11 is a longitudinal cross-sectional perspective view illustrating a lower housing constituting a sensor apparatus according to an embodiment of the present disclosure.
FIG. 12 is a longitudinal cross-sectional perspective view illustrating a back cover constituting a sensor apparatus according to an embodiment of the present disclosure.
FIG. 13 is a longitudinal cross-sectional perspective view illustrating a cap bolt constituting a sensor apparatus according to an embodiment of the present disclosure.
FIG. 14 is a perspective view illustrating a connect plug constituting a sensor apparatus according to an embodiment of the present disclosure.
FIG. 15 is a longitudinal cross-sectional perspective view illustrating the connect plug.
FIG. 16 is a partially enlarged cross-sectional view illustrating the combined state of the connect plug and the main board.
FIG. 17 is an exploded perspective view illustrating a sensor apparatus according to another embodiment of the present disclosure.
FIG. 18 is a longitudinal cross-sectional view illustrating a sensor apparatus according to another embodiment.
FIG. 19 is an enlarged view illustrating portion A of FIG. 18.
FIG. 20 is an exploded perspective view illustrating the board cushion, shielding cylinder, and bottom cushion.
FIG. 21 is a perspective view illustrating a state where a shield tape is attached to a transducer according to an embodiment of the present disclosure.
FIG. 22 is a bottom perspective view illustrating the back cover accommodating the transducer.
FIG. 23 is a perspective view illustrating the front cover combined with waterproof tape and waterproof sealing.
FIG. 24 is an enlarged view illustrating portion B of FIG. 18.

### The Detailed description

Hereinafter, a sensor apparatus according to an embodiment of the present disclosure will be described in detail with reference to the drawings.

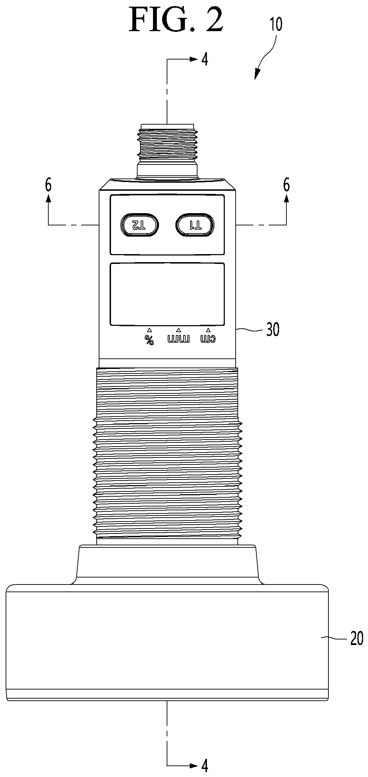

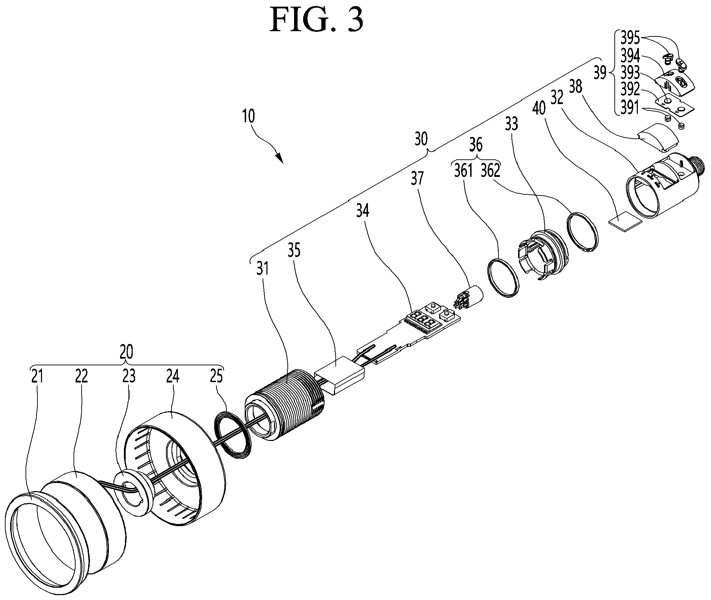

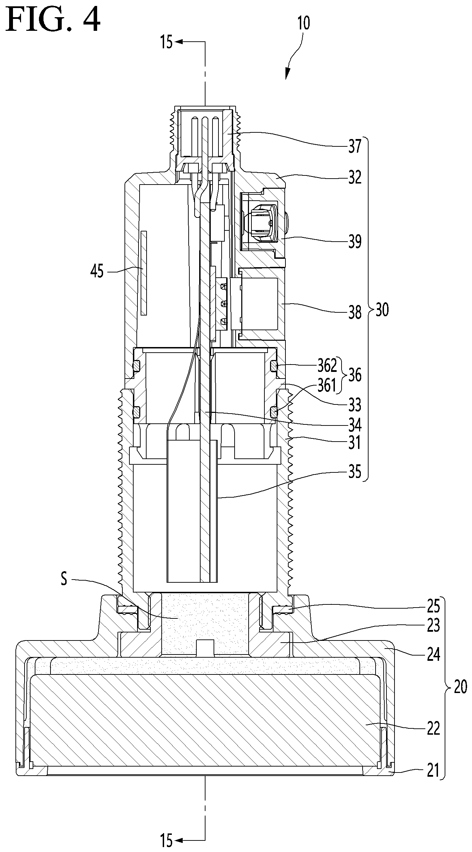

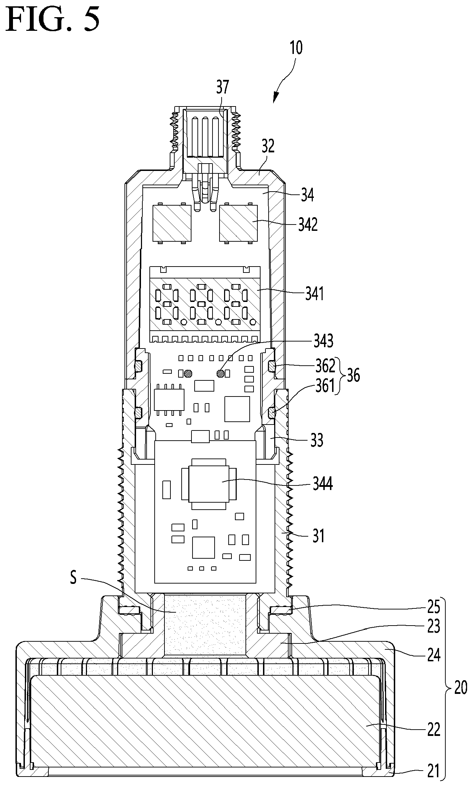

FIG. 2 is a front view illustrating a sensor apparatus according to an embodiment of the present disclosure, FIG. 3 is an exploded perspective view illustrating the sensor apparatus, FIG. 4 is a longitudinal cross-sectional view illustrating the sensor apparatus taken along line 4-4 in FIG. 2, and FIG. 5 is a longitudinal cross-sectional view illustrating the sensor apparatus taken along line 5-5 in FIG. 4.

Referring to FIGS. 2 to 5, the sensor apparatus 10 according to an embodiment of the present disclosure may be largely described as including a sensing module 20 and a control module 30.

In detail, the sensing module 20 includes a transducer 22 that generates ultrasonic waves, a front cover 21 coupled to the front surface of the transducer 22, a back cover 24 that covers the rear surface of the transducer 22, and a cap bolt 23 connecting the sensing module 20 to the control module 30. In addition, the sensing module 20 may further include a gasket 25 interposed at a portion where the back cover 24 and the control module 30 are connected.

The combination of the front cover 21 and the back cover 24 may be defined as a cover member. In addition, the front surface of the front cover 21 is opened to expose the front surface of the transducer 22 to the outside, so that the detection signal generated by the transducer 22 is emitted, and the signal is reflected and returned after hitting the target. The inside of the cover member is filled with filler S made of epoxy material.

Here, as an example of the sensor apparatus 10, an ultrasonic sensor consisting of a transducer 22 that generates ultrasonic waves will be described as an example, but it should be noted that the spirit of the present disclosure is not limited to the name of the transducer 22.

That is, the transducer 22 may include a means other than an ultrasonic generator as a detection signal generating means that generates a signal for detection. As an example, in the case of a capacitive proximity sensor, a capacitor electrode plate or probe may be defined as a transducer, and in the case of an infrared sensor, an infrared transceiver including an infrared emitter and a receiver may be defined as a transducer.

Therefore, the transducer 22 described in this specification is not limited to a signal generating means for generating ultrasonic waves, but should be defined and interpreted as a detection signal transceiver encompassing all signal transmitting and receiving means for generating and receiving signals for detection.

The control module 30 includes a lower housing 31, an upper housing 32, and a coupler 33 connecting the lower housing 31 and the upper housing 32. The combination of the lower housing 31, the upper housing 32, and the coupler 33 may be defined as a case that forms the outer appearance of the control module 30.

The control module 30 may further include a seal ring 36 mounted on the outer circumferential surface of the coupler 33. The seal ring 36 may include a lower seal ring 361 in close contact with the inner circumferential surface of the lower housing 31 and an upper seal ring 362 in close contact with the inner circumferential surface of the upper housing 32.

In addition, the control module 30 may further include a main board 34 inserted into the case, a connect plug 37 coupled to the upper end of the main board 34, a shielding member 35 surrounding a lower portion of the main board 34 and shields noise, and a manipulator 39 and a window 38 mounted on the upper housing 32.

A number of electrical components may be mounted on the front surface (or upper surface) of the main board 34. The plurality of electrical components may include at least portion or all of one or more tact switches 342, a display part 341 (or variable display part) placed at a point away from the tact switch 342, one or more light emitting elements 343 mounted on a point away from the display part 341, and a control chip 344 mounted on the area surrounded by the shielding member 35 to interpret and process the signal transmitted from the transducer 22.

The shielding member 35 is a flexible sheet, one end portion of which is connected to the back of the main board 34, extends from the back of the main board 34, and then surrounds the main board 34 to shield noise from flowing into the main board 34.

In addition, the light-emitting device 343 includes an LED device that emits light of a specific color. The coupler 33 includes a transparent or translucent plastic material, so that the light emitted from the light emitting device 343 passes through the coupler 33 and can be recognized by the user's eyes.

Meanwhile, the manipulator 39 may include a tact button 391, a button sticker 392 on which a button protrusion 393 is formed, a button cover 394, and a button 395, and the manipulator 39 will be described in more detail with reference to the drawings below.

In addition, the control module 30 may further include a desiccant 45 placed on the rear side of the main board 34.

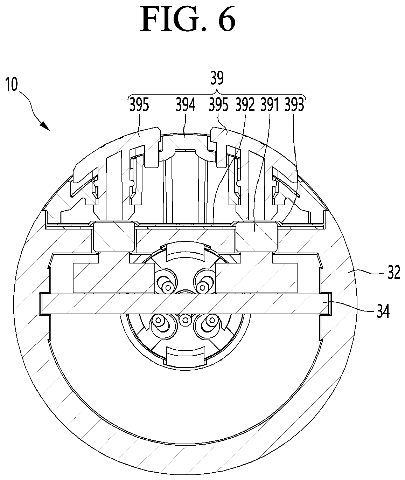

FIG. 6 is a cross-sectional view illustrating the sensor apparatus taken along line 6-6 in FIG. 2.

Referring to FIGS. 3 and 6, one or more tact switches 342 are mounted on the front surface (or upper surface) of the main board 34, and the tact button 391 is placed on the upper surface of the tact switch 342.

In this embodiment, a pair of tact switches 342 are mounted on the front surface of the main board 34 as an example.

Then, the button sticker 392 is seated on the upper surface of the tact button 391, and a button protrusion 393 placed on the upper surface of the tact button 391 protrudes from the button sticker 392.

Additionally, buttons 395 corresponding to the number of tact switches 342 penetrate the button cover 394, and the end portions of the buttons 395 are in contact with the button protrusion 393. A hook-shaped protrusion protrudes from the outer circumferential surface of the end portion of the button 395, and the protrusion is designed to be caught on the button cover 394 so that the button 395 does not escape from the button cover 394.

According to this structure, when the user presses the button 395, the button 395 descends, and the button 395 presses the button protrusion 393, the tact button 391, and the tact switch 342. Due to the structure of the button protrusion 393 and the tact switch 342 that protrude from the button sticker 392 by an embossing process, when the force pressing the button 395 is removed, the button 395 returns to the original position thereof. That is, even if a separate elastic member is not inserted into the button 395, the button 395 can perform the same function as a push-pull button.

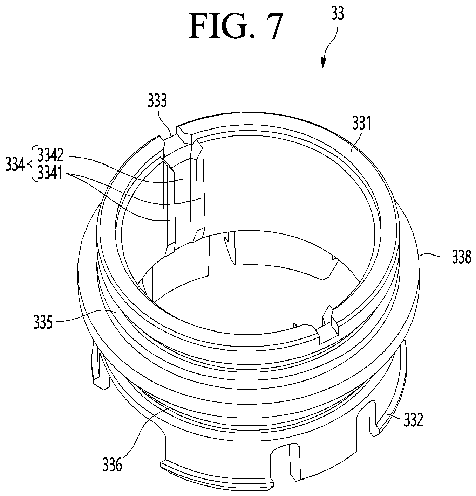

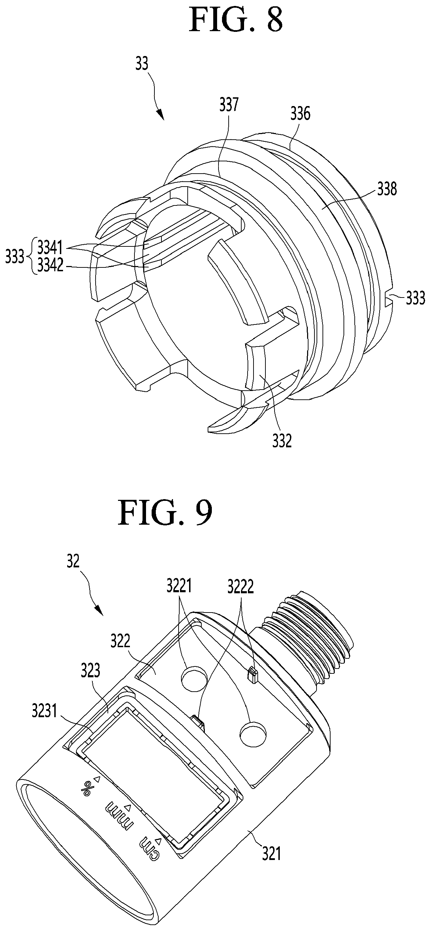

FIG. 7 is a plan perspective view illustrating a coupler constituting a sensor apparatus according to an embodiment of the present disclosure, and FIG. 8 is a bottom perspective view illustrating the coupler.

Referring to FIGS. 7 and 8, the coupler 33 includes a cylindrical coupler body 331, a plurality of engaging hooks 332 extending from the front end (or lower end) of the coupler body 331, a partition rib 338 protruding from the outer circumferential surface of the coupler body 331, and a board guide part 334 formed on the inner circumferential surface of the coupler body 331. The board guide part 334 may be provided as a pair. The light emitted from the light emitting device 343 mounted on the main board 34 is emitted to the outside through the partition rib 338 and can be recognized by the user's eyes.

In detail, the coupler 33 is made of a material that allows light to pass through, and the partition rib 338 is surrounded in a circular band shape on the outer circumferential surface of the coupler body 331, so that the light emitted from the light emitting device 343 is emitted to the outside through the entire circular partition rib 338. Accordingly, the partition rib 338 can be recognized as light surrounding the outer circumferential surface of the sensor apparatus 10 in a circular band shape.

In detail, the partition rib 338 may be formed at a point spaced apart from the front and rear ends (or upper end) of the coupler body 331. For example, the partition rib 338 may be located at the same distance from the front and rear ends (or upper end) of the coupler body 331, but is not limited thereto.

A lower sealing groove 336 into which the lower sealing 361 is inserted is formed on the outer circumferential surface of the coupler body 331, which is between the partition rib 338 and the front end of the coupler body 331. An upper sealing groove 335 into which the upper sealing 362 is inserted is formed on the outer circumferential surface of the coupler body 331, which is between the partition rib 338 and the rear end of the coupler body 331.

The pair of board guide parts 334 are formed at positions facing each other on the inner circumferential surface of the coupler body 331. Each of the pair of board guide parts 334 includes a pair of guide rails 3341 that protrude from the inner circumferential surface of the coupler body 331 and extend by the length of the coupler body 331, and a guide groove 3342 defined between the pair of guide rails 3341.

A board engaging groove 333 is recessed at the rear end of the coupler body 331, and the board engaging grooves 333 may be provided in pairs and formed at a point connected to the upper end of the pair of guide grooves 3342. Both side end portions of the main board 34 are inserted into the pair of guide grooves 3342 to guide the main board 34 to be smoothly inserted into the lower housing 31. In addition, step portions are formed on both side end portions of the main board 34, and the step portions are caught in the board engaging groove 333, so that the main board 34 is limited from being inserted into the lower housing 31 any longer.

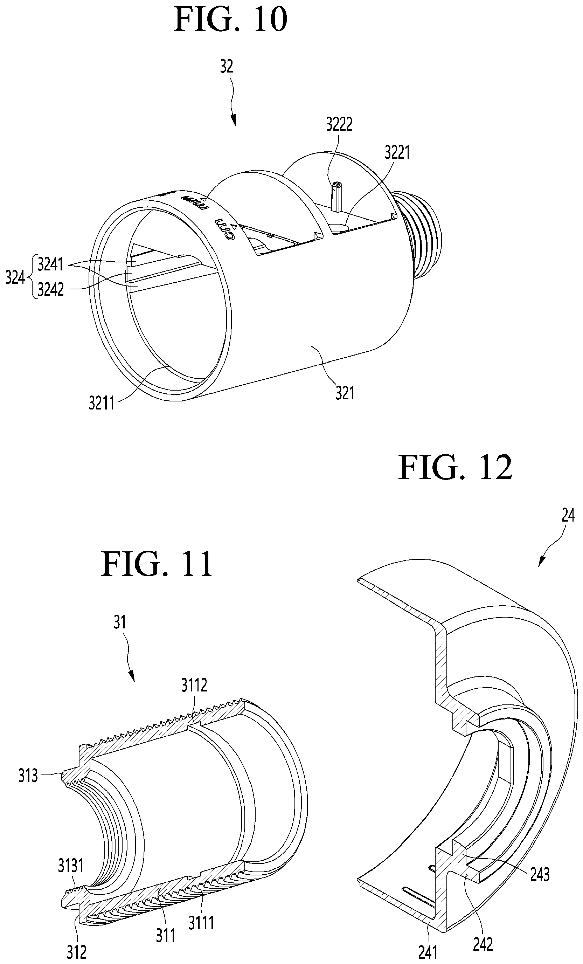

FIG. 9 is a front perspective view illustrating the upper housing constituting the sensor apparatus according to an embodiment of the present disclosure, and FIG. 10 is a bottom perspective view illustrating the upper housing.

Referring to FIGS. 9 and 10, the upper housing 32 includes an upper housing body 321 having an empty cylindrical shape, and a window seating part 323 stepped inward from the outer circumferential surface of the upper housing body 321 and a manipulator seating part 322.

In detail, a through-hole 3231 is formed in the window seating part 323, and the front portion of the display part 341 is inserted into the through-hole 3231. Additionally, the window 38 is coupled to the window seating part 323, allowing the user to recognize numbers, letters, symbols, or the like displayed on the display part 341.

A tact button hole 3221 into which the tact button 391 is inserted is formed in the manipulator seating part 322, and the button sticker 392 is placed on the surface where the tact button hole 3221 is formed. The button sticker 392 may also serve as a waterproof member that covers the tact button hole 3221 and prevents moisture from penetrating through the tact button hole 3221.

Finally, the button cover 394 to which the button 395 is coupled is coupled to the manipulator seating part 322. The tact button holes 3221 may be provided as a pair.

Meanwhile, a board guide part 324 is formed on the inner circumferential surface of the upper housing body 321, and the board guide part 324 includes a pair of guide rails 3241 and a guide groove 3242 defined between the pair of guide rails 3241. The board guide part 324 may be provided as a pair.

When the upper housing 32 is coupled to the coupler 33, the board guide part 334 formed on the inner circumferential surface of the coupler 33 is aligned with the board guide part 324. Therefore, both side end portions of the main board 34 are inserted in the lower housing 31 while passing through the board guide part 324 of the upper housing 32 and the board guide part 334 of the coupler 33 and enter the lower housing 31.

FIG. 11 is a longitudinal cross-sectional perspective view illustrating a lower housing constituting a sensor apparatus according to an embodiment of the present disclosure.

Referring to FIG. 11, the lower housing 31 includes a cylindrical lower housing body 311 and an insert neck 313 extending from the lower end of the lower housing body 311.

In detail, the insert neck 313 has an outer diameter smaller than the outer diameter of the lower housing body 311 and extends to a predetermined length to form a gasket shoulder 312, and the insert neck 313 is inserted into the back cover 24 of the sensing module 20. The gasket 25 is in close contact with the gasket shoulder 312.

A thread 3111 is formed on the outer circumferential surface of the lower housing body 311, and an engaging groove 3112 is formed in a circular band shape on the inner circumferential surface. The engaging hook 332 of the coupler 33 is caught in the engaging groove 3112 to prevent the coupler 33 from being separated from the lower housing 31. A thread 3131 is formed on the inner circumferential surface of the insert neck 313.

FIG. 12 is a longitudinal cross-sectional perspective view illustrating a back cover constituting a sensor apparatus according to an embodiment of the present disclosure.

Referring to FIG. 12, the back cover 24 includes a transducer accommodating part 241 that accommodates the transducer 22, and a cap bolt accommodating part 242 extending from the rear surface (or upper surface) of the transducer accommodating part 241, and a gasket seating part 243 that protrudes from the inner circumferential surface of the cap bolt accommodating part 242 and surrounds in the circumferential direction.

The front end portion of the transducer accommodating part 241 is open and shielded by the front cover 21. Also, the diameter of the cap bolt accommodating part 242 extends to have a smaller diameter than the diameter of the transducer accommodating part 241.

The gasket 25 is in close contact with the rear surface of the gasket seating part 243. In detail, when the insert neck 313 is inserted into the cap bolt accommodating part 242, the gasket 25 is pressed by the gasket shoulder 312 and the gasket seating part 243. As a result, leakage through the connection portion between the lower housing 31 and the back cover 24 is prevented.

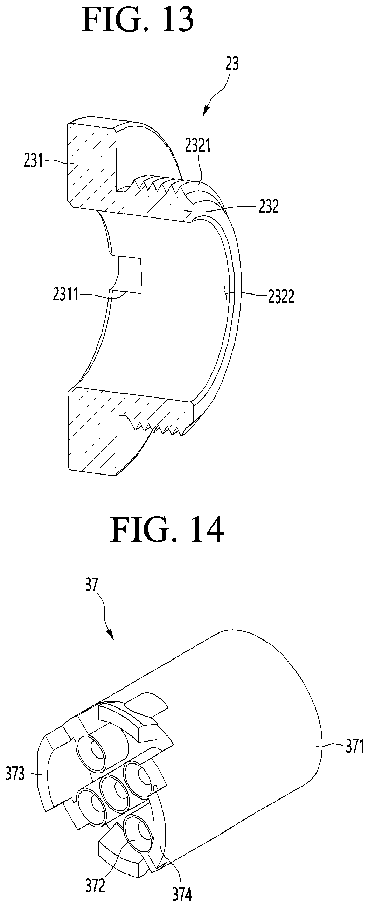

FIG. 13 is a longitudinal cross-sectional perspective view illustrating a cap bolt constituting a sensor apparatus according to an embodiment of the present disclosure.

Referring to FIG. 13, the cap bolt 23 includes a circular base 231 and a fastening sleeve 232 extending from the rear surface of the base 231.

In detail, the fastening sleeve 232 extends with an outer diameter smaller than the outer diameter of the base 231. The through-hole 2322 formed inside the fastening sleeve 232 penetrates the base 231. Also, the signal line and power line extending from the transducer 22 pass through the through-hole 2322 and are connected to the main board 34.

A thread 2321 is formed on the outer circumferential surface of the fastening sleeve 232, and the screw thread 2321 engages and couples with a thread 3131 formed on the insert neck 313 of the lower housing 31. That is, the cap bolt 23 is screwed to the insert neck 313 of the lower housing 31.

Additionally, as the cap bolt 23 is screwed to the insert neck 313, the base 231 is in close contact with the gasket seating part 243. In detail, the base 231 is in close contact with the gasket seating part 243, and the gasket 25 is interposed between the gasket shoulder 312 of the lower housing 31 and the gasket seating part 243, and thus double waterproofing/dustproofing effect can be achieved.

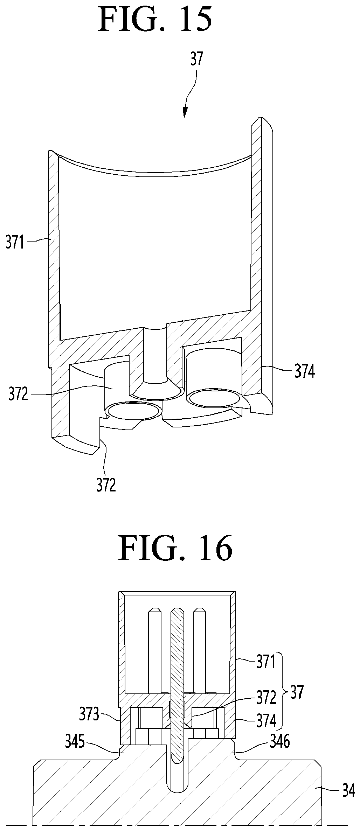

FIG. 14 is a perspective view illustrating a connect plug constituting a sensor apparatus according to an embodiment of the present disclosure, FIG. 15 is a longitudinal cross-sectional perspective view illustrating the connect plug, and FIG. 16 is a partially enlarged cross-sectional view illustrating the combined state of the connect plug and the main board.

Referring to FIGS. 14 to 16, the connect plug 37 includes a cylindrical plug body 371 whose front surface (or bottom) is sealed and the rear surface (or upper surface) is open, a plurality of terminal bosses 372 extending from the front surface, and a seating rib extending from the edge of the front surface.

The seating rib may include a first seating rib 373 and a second seating rib 374 formed opposite the first seating rib 373. The first seating rib 373 and the second seating rib 374 may extend to different lengths, and for example, the first seating rib 373 may be formed to be longer than the second seating rib 374.

Meanwhile, a seating jaw may protrude from the rear end (or upper end) of the main board 34 and may be in contact with the seating rib. The seating jaw may include a first seating jaw 345 in contact with the first seating rib 373 and a second seating jaw 346 in contact with the second seating rib 374. Additionally, the height of the first seating projection 345 may be smaller than the height of the second seating projection 346. According to this structure, the second seating rib 374 faces the first seating jaw 345 and the first seating rib 373 is incorrectly inserted in a direction facing the second seating jaw 346. In this case, the connect plug 37 is prevented from being properly coupled, allowing the user to recognize incorrect assembly.

Hereinafter, the assembly sequence of the sensor apparatus 10 will be described.

First, the front cover 21 is attached to the front surface of the transducer 22. For this purpose, adhesive may be applied to the inner circumferential surface of the front cover 21, where the front surface of the transducer 22 is in close contact.

Next, the coupler 33 is inserted and fixed to the rear end of the lower housing 31. At this time, in addition to the engaging hook 332 of the coupler 33 being caught in the engaging groove 3112 of the lower housing 31, adhesive is applied to the inner circumferential surface of the lower housing 31 and thus the coupler 33 can be combined more stably.

Next, the gasket 25 is inserted into the outer circumferential surface of the insert neck 313 of the lower housing 31, and the insert neck 313 is inserted into the cap bolt accommodating part 242 of the back cover 24.

In this state, the cap bolt 23 is inserted so that the fastening sleeve 232 and the insert neck 313 are screwed together. Then, the cap bolt 23 is rotated and tightened until the base 231 comes into close contact with the gasket seating part 243 and the gasket 25 is compressed.

Next, the transducer 22 to which the front cover 21 is attached is inserted into the transducer accommodating part 241 of the back cover 24, and the signal line and power line of the transducer 22 passes through the cap bolt 23 and the lower housing 31.

In this state, the filler S is injected into the lower housing 31. Here, when the front cover 21 is placed on a plane, the filler is filled only to a level lower than the surface passing through any one of at least the rear end (or upper end) of the fastening sleeve 232 of the cap bolt 23, the gasket shoulder 312, and the rear end (or upper end) of the cap bolt accommodating part 242. This is to prevent the end portion of the main board 34 from being submerged in the filler when the main board 34 is inserted into the lower housing 31.

Additionally, a waterproof effect can be obtained by filling the gap between the cap bolt 23 and the back cover 24 and the gap between the transducer 22 and the back cover 24 with the filler. Furthermore, by ensuring that the transducer 22 is fixed inside the back cover 24, the transducer 22 can be prevented from shaking inside the back cover 24 due to tolerances of the transducer 22.

At this time, before inserting the transducer 22 to which the front cover 21 is attached, adhesive is applied to the inner circumferential surface of the back cover 24, and after inserting the transducer 22 to which the front cover 21 is attached into the transducer accommodating part 241, the filler S can be injected. Then, the front cover 21 and the back cover 24 are firmly coupled to prevent the filler S from leaking to the outside through the connection portion of the front cover 21 and the back cover 24.

Meanwhile, after the filler is filled inside the lower housing 31 or before filling the filler, a plurality of terminal parts penetrating the connect plug 37 are soldered to the main board 34. Then, the shielding member 35 is wound around the main board 34.

Then, the front end portion of the main board 34 to which the shielding member 35 is coupled is inserted into the lower housing 31, and then, finally, the rear end portion of the main board 34 is inserted into the upper housing 32 so that the front end portion of the upper housing 32 is seated on the partition rib 338.

When each component is assembled in this order, the space between the coupler 33 and the upper housing 32 is sealed by the upper sealing 362, and the space between the coupler 33 and the upper housing 32 is sealed by the lower sealing 361.

Due to the above configuration, the filler is filled only to a height lower than the height of the lower end portion of the main board 34, so there is an advantage that the risk of damage of the main board 34 and the components mounted on the main board 34 occurring due to contraction and expansion between different materials is eliminated.

In addition, since the case that accommodates the control components including the main board 34 is composed of two housings, there is an advantage that it is easy to replace or repair the components accommodated inside the case.

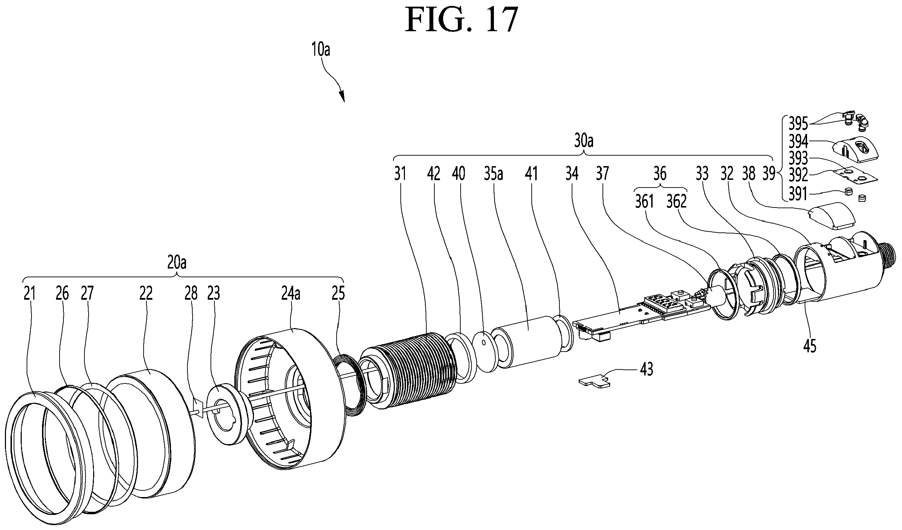

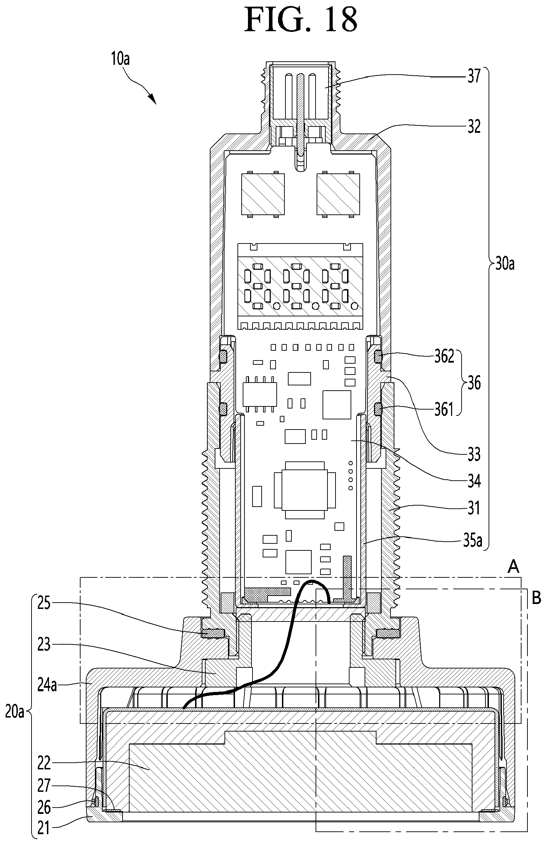

FIG. 17 is an exploded perspective view illustrating a sensor apparatus according to another embodiment of the present disclosure, and FIG. 18 is a longitudinal cross-sectional view illustrating a sensor apparatus according to another embodiment.

Referring to FIGS. 17 and 18, the sensor apparatus 10a according to the present embodiment is the same as the sensor apparatus 10 according to the previous embodiment in most of the configurations, and redundant description of the same configuration will be omitted.

In detail, the sensor apparatus 10a includes a sensing module 20a and a control module 30a, similar to the sensor apparatus 10 according to the previous embodiment.

Like the previous embodiment, the sensing module 20a includes a front cover 21, a transducer 22, a cap bolt 23, a back cover 24a, and a gasket 25, and the structure of the back cover 24a has some changes from the structure of the back cover 24 according to the previous embodiment, which will be described later along with the drawings.

In addition, the sensing module 20a constituting the sensor apparatus 10a according to this embodiment further includes a waterproof sealing 26, a waterproof tape 27, and a shield tape 28 for shielding inverter noise.

In addition, the control module 30a constituting the sensor apparatus 10a according to this embodiment, like the previous embodiment, includes a lower housing 31, an upper housing 32, a coupler 33, and a main board 34., a sealing 36, a connect plug 37, a window 38, and a manipulator 39.

In addition, the control module 30a according to this embodiment further includes a shielding cylinder 35a for shielding inverter noise, a bottom cushion 40 provided at the lower end of the shielding cylinder 35a, a board cushion 41 seated at the inner lower end of the shielding cylinder 35a, a ring-shaped gap cushion 42 interposed between the shielding cylinder 35a and the lower housing 31, and an auxiliary cushion 43 protecting the circuit components mounted to the main board 34.

The shielding cylinder 35a may be made of a conductive material, for example, a metal material.

Note that the auxiliary cushion 43 may also be provided on the main board 34 of the sensor apparatus 10 according to the previous embodiment. The auxiliary cushion 43 may be attached to the upper surface of a component with a relatively large volume and height among various components mounted on the main board 34.

Meanwhile, in the sensor apparatus 10 according to the previous embodiment, in order to shield inverter noise, as illustrated in FIG. 3, after one end portion of a thin copper sheet is soldered and connected to the main board 34, a shielding member 35 that surrounds at least a portion of the main board 34 was applied.

However, the sensor apparatus 10 according to the present embodiment is provided with a cylindrical shielding member, that is, a shielding cylinder 35a, as illustrated, and the main board 34 is accommodated inside the shielding cylinder 35a, and thus noise flowing in from the side of the lower housing 31 can be effectively shielded.

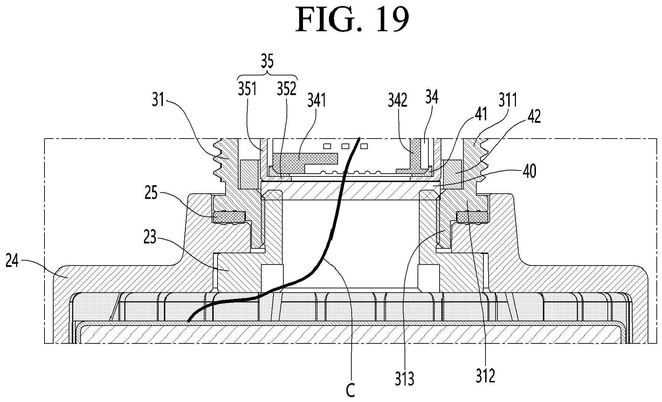

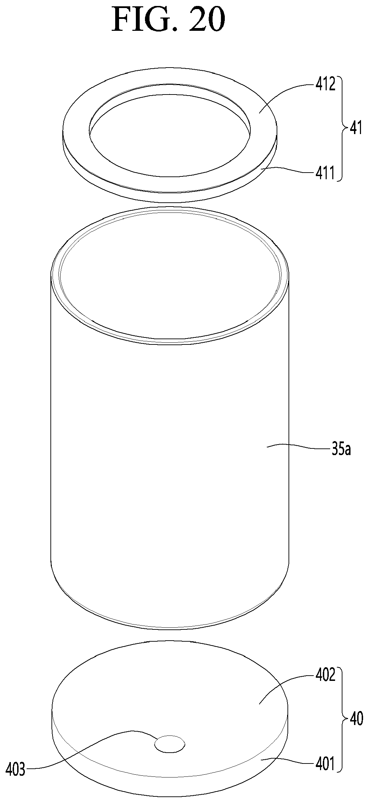

FIG. 19 is an enlarged view illustrating portion A of FIG. 18, and FIG. 20 is an exploded perspective view illustrating the board cushion, shielding cylinder, and bottom cushion.

Referring to FIGS. 19 and 20, the bottom cushion 40 is placed on the lower end portion of the lower housing 31, and the shielding cylinder 35a is placed on the upper surface of the bottom cushion 40.

In detail, the bottom cushion 40 is seated on the upper surface of the fastening sleeve 232 of the cap bolt 23 inserted into the insert neck 313 (see FIG. 11) constituting the lower housing 31. in addition, the shielding cylinder 35a is seated on the upper surface of the bottom cushion 40.

In addition, the ring-shaped gap cushion 42 is inserted into the outer circumferential surface of the shielding cylinder 35a, and seats on a portion where the lower end portion of the lower housing body 311 and the insert neck 313 meet, that is, on the upper surface of the gasket shoulder 312. In detail, the gap cushion 42 is intervened between the outer circumferential surface of the shielding cylinder 35a and the inner circumferential surface of the lower housing 31 to maintain a gap so that the shielding cylinder 35a is not in contact with the lower housing 31.

In addition, the shielding cylinder 35a includes a cylindrical cylinder body 351 in which the main board 34 is accommodated, and a band-shaped seating end 352 which extends from the lower end of the cylinder body 351 toward the center of the cylinder body 351.

In detail, the board cushion 41 is inserted into the inside of the shielding cylinder 35a and is seated on the seating end 352. In addition, the lower left and right edges of the main board 34 are in contact with the board cushion 41. Here, a first ground terminal 341 and a second ground terminal 342 are formed on the lower left and right edges of the main board 34 that are in contact with the board cushion 41.

In addition, as illustrated in FIG. 20, the board cushion 41 includes a cushion body 411 formed in a circular ring shape, and a conductive layer 412 provided as one body on the upper surface of the cushion body 411. The conductive layer 412 includes conductive fibers. The width of the board cushion 41 may be formed to correspond to the width of the seating end 352.

Like the conductive layer 412, the cushion body 411 may include a conductive material and form a via hole structure. The conductive layer 412 is provided in a shape of being in contact with the first and second ground terminals 341 and 342 and being attached to the upper surface of the cushion body 411 to prevent defective contact with the ground terminals 341 and 342. In addition, the portion of the cushion body 411 on which the main board 34 is seated is compressed and becomes thinner, and a restoring force due to elasticity acts on the main board 34, causing the ground terminals 341 and 342 and the conductive layer 412 ensures that stable contact is maintained. In addition, since the cushion body 411 made of a conductive material and the shielding cylinder 35a made of a conductive material are in contact with each other in a conductive manner, the ground terminals 341 and 342 of the main board 34 are electrically connected to the shielding cylinder 35a.

That is, unlike the previous embodiment in which one end portion of the shielding member is electrically connected to the main board 34 by soldering, the board cushion 41 is placed on the seating end 352 of the shielding cylinder 35a, and as long as the assembly process of placing the main board 34 on the board cushion 41 is completed normally, the main board 34 is electrically connected to the shielding cylinder 35a that functions as a noise shielding member. Therefore, there is an advantage that no connection work for energizing between the main board 34 and the shielding cylinder 35a is required.

In addition, the bottom cushion 40 includes a circular insulating cushion body 401 and a conductive layer 402 provided as one body on the upper surface of the cushion body 401. The conductive layer 402 may be made of the same material as the conductive layer 412 of the board cushion 41.

A cable hole 403 is formed on one side of the bottom cushion 40 to allow the cable C extending from the transducer 22 to pass through.

The conductive layer 402 functions to block inverter noise from entering through the opening formed at the lower end portion of the shielding cylinder 35a, and the cushion body 401 performs the function of blocking electrical conduction between the cap bolt 23 and the shielding cylinder 35a.

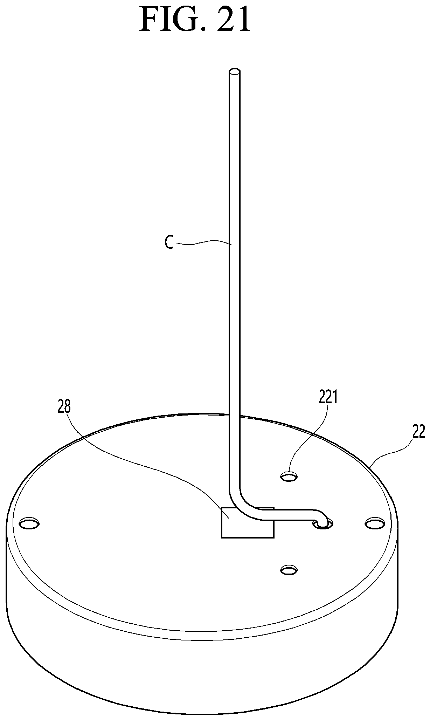

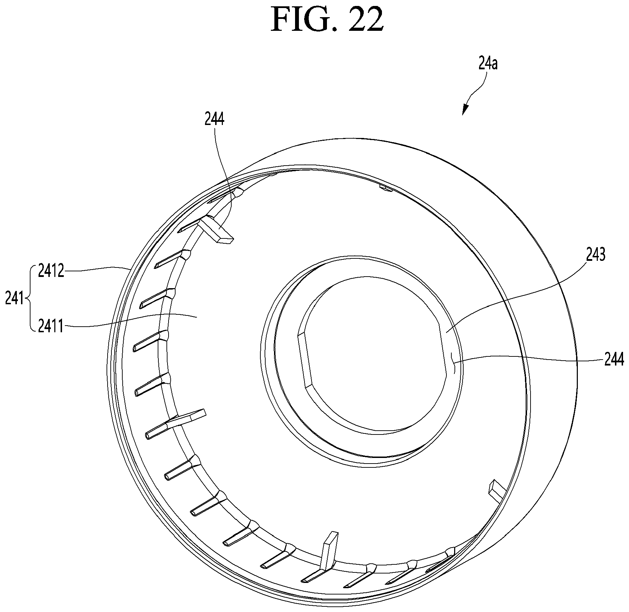

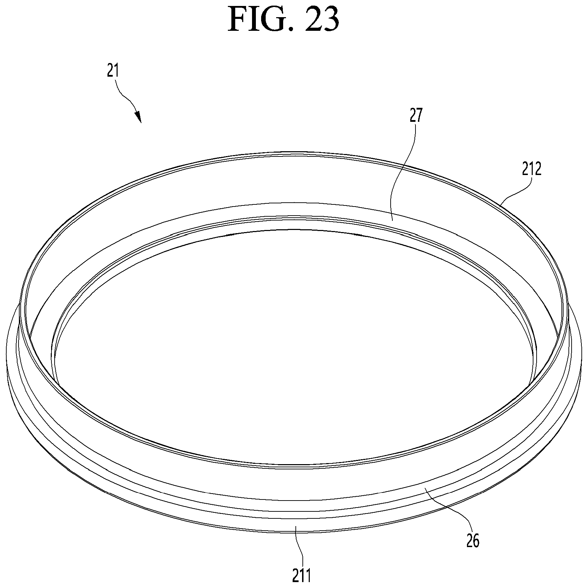

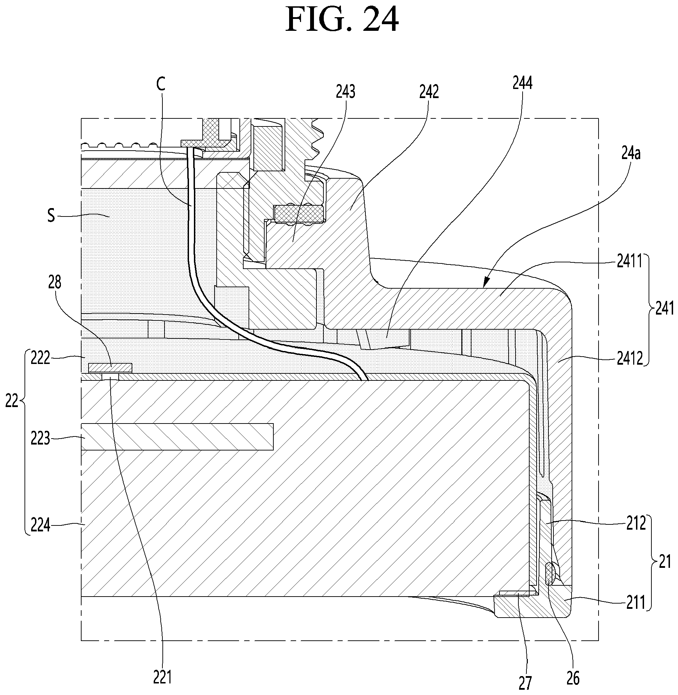

FIG. 21 is a perspective view illustrating a state where a shield tape is attached to a transducer according to an embodiment of the present disclosure, FIG. 22 is a bottom perspective view illustrating the back cover accommodating the transducer, FIG. 23 is a perspective view illustrating the front cover combined with waterproof tape and waterproof sealing, and FIG. 24 is an enlarged view illustrating portion B of FIG. 18.

First, referring to FIGS. 21 and 24, the transducer 22 includes a housing 222 made of metal, a piezoceramic 223 provided inside the housing 222 to generate ultrasonic waves, and an acoustic insulation layer 224 filled inside the housing 222. The acoustic insulation layer 224 may include polyurethane foam.

Additionally, a plurality of openings 221 may be formed on the upper surface of the housing 222, and the cable C may extend through any one of the plurality of openings 221. In addition, noise generated from the outside may flow into the piezoceramic 223 inside the transducer 22, and the noise flowing in may be delivered toward the main board 34 through the opening located directly above the piezoceramic 223 among the plurality of openings 221. In order to prevent such noise penetration, a shield tape 28 for noise shielding may be attached to the opening located directly above the piezoceramic 223.

Referring to FIGS. 22 and 24, the back cover 24a according to the present embodiment, like the back cover 24 according to the previous embodiment, includes a sleeve-shaped cap bolt accommodating part 242 and a transducer accommodating part 241 extending from the lower end of the cap bolt accommodating part 242. In addition, the transducer accommodating part 241 consists of a horizontal part 2411 and a vertical part 2412 bent and extending from an end portion of the horizontal part 2411. In addition, a structure in which the gasket seating part 243 is formed on the inner circumferential surface of the cap bolt accommodating part 242, and a structure in which the inside of the back cover 24a is filled with a filler S, but only up to the upper surface of the cap bolt 23 are the same as the back cover 24 according to the previous embodiment.

The back cover 24a according to this embodiment has a plurality of pressurized ribs 244 protruding from the bottom of the horizontal portion 2411, and the plurality of pressurized ribs 244 are disposed at a predetermined distance in the circumferential direction. Additionally, the plurality of pressurized ribs 244 may be provided on the bottom edge of the horizontal portion 2411, but are not limited thereto.

When the transducer 22 is accommodated in the transducer accommodating part 241, the plurality of pressurized ribs 244 press the upper surface of the transducer 22, so that the lower edge of the transducer 22 is in close contact with the front cover 21, so that the transducer 22 does not shake inside the transducer accommodating part 241.

Meanwhile, referring to FIGS. 23 and 24, the front cover 21, like the previous embodiment, includes a cover base 211 formed in a circular band shape, and a cover sleeve 212 extending from the upper surface of the cover base 211.

In detail, the cover sleeve 212 extends upward to a predetermined height at a point spaced a predetermined distance from the inner edge and the outer edge of the cover base 211, respectively.

In addition, the bottom edge of the transducer 22 is seated on the upper surface of the cover base 211 corresponding to the inside of the cover sleeve 212, and the lower end portion of the back cover 24a is seated on the upper surface of the cover base 211 corresponding to the outside of the cover sleeve 212.

According to this embodiment, it is characterized in that the bottom of the acoustic insulating layer 224 made of polyurethane foam constituting the transducer 22 is seated on the upper surface of the cover base 211 and, in order to overcome loss of elasticity of the polyurethane foam and poor surface adhesion, a waterproof tape 27 is attached to the upper surface of the cover base 211 on which the transducer 22 is seated. The waterproof tape 27 in the form of double-sided tape is provided on the upper surface of the cover base 211 corresponding to the inner side of the cover sleeve 212, thereby there is an effect of improving adhesion between the bottom of the oscillator 22 and the upper surface of the cover base 211 and ensuring waterproof reliability.

In addition, the waterproof sealing 26 is fitted to the lower end of the outer circumferential surface of the cover sleeve 212, thereby minimizing the phenomenon of moisture infiltrating between the cover sleeve 212 and the inner circumferential surface of the lower end portion of the back cover 24a.

## Claims

1. A sensor apparatus (10) comprising:
a transducer (22) defined as a detection signal transceiver that generates and receives a signal for detection;
a main board (34) electrically connected to the transducer (22) and on which a control chip that interprets and processes signals transmitted from the transducer (22) is mounted;
a cover member (21,24) configured to accommodate the transducer (22);
a lower housing (31) having one end which is connected to the cover member (21,24) and configured to accommodate a portion of the main board (34);
an upper housing (32) configured to accommodate the remaining portion of the main board (34); and
a coupler (33) configured to connect the other end of the lower housing and one end of the upper housing.

2. The sensor apparatus of claim 1, further comprising a filler (S) filled inside the cover member (21,24),
wherein the filler (S) is filled at least to a height spaced apart from one end portion of the main board (34).

3. The sensor apparatus of claim 1 or 2, further comprising a gasket (25) interposed at a portion where the lower housing (31) and the cover member (21,24) are connected.

4. The sensor apparatus of claim 3, further comprising a cap bolt (23) configured to connect the cover member (21,24) and the lower housing (31).

5. The sensor apparatus of claim 4, wherein the cover member (21,24) includes:
a front cover (21) coupled to a front surface of the transducer (22); and
a back cover (24) configured to accommodate the transducer (22) and having a front surface to which the front cover (21) is coupled,
wherein the back cover (24) includes:
a transducer accommodating part (241) configured to accommodate the transducer (22),
a cap bolt accommodating part (242) extending from a rear surface of the transducer accommodating part (241) and configured to accommodate the cap bolt (23) therein; and
a gasket seating part (243) extending from an inner circumferential surface of the cap bolt accommodating part (242) and having a rear surface on which the gasket (25) is placed.

6. The sensor apparatus of claim 5, wherein the cap bolt (23) includes:
a base (231) in close contact with a front surface of the gasket seating part (243); and
a fastening sleeve (232) extending from a rear surface of the base (231), extending inside the cap bolt accommodating part (242), and having a thread (2321) formed on an outer circumferential surface.

7. The sensor apparatus of claim 6, wherein the lower housing (31) includes:
a lower housing body (311) with a hollow barrel shape, and
an insert neck (313) extending from a front surface of the lower housing body (311) and having a thread (3131) formed on an inner circumferential surface,
wherein the fastening sleeve (232) is inserted into an inner portion of the insert neck (313) and screwed to the insert neck (313).

8. The sensor apparatus of any one of claims 1 to 7, wherein the coupler (33) includes:
a barrel-shaped coupler body (331); and
a partition rib (338) configured to protrude and surround the outer circumferential surface of the coupler body (331),
wherein one end of the upper housing (32) is in contact with one surface of the partition rib (338), and
wherein the other end of the lower housing (31) is in contact with the other surface of the partition rib (338), and
wherein the outer surface of the partition rib (338) is exposed to an outside.

9. The sensor apparatus of claim 8, further comprising at least one light emitting element (343) mounted on the main board (34),
wherein the light emitted from the light emitting element (343) is emitted to the outside through an outer surface of the partition rib (338).

10. The sensor apparatus of claim 8 or 9, further comprising:
a lower sealing (361) mounted on an outer circumferential surface of the coupler body (331) between the partition rib (338) and one end portion of the coupler body (331) and in close contact with an inner circumferential surface of the lower housing (31); and
an upper sealing (362) mounted on the outer circumferential surface of the coupler body (331) between the partition rib (338) and the other end portion of the coupler body (331) and in close contact with an inner circumferential surface of the upper housing (32).

11. The sensor apparatus of any one of claims 1 to 10, further comprising:
a connect plug (37) inserted into the other end of the upper housing (32); and
one or more terminals soldered to the main board (34) through the connect plug (37),
wherein the connect plug (37) includes:
a plug body (371);
a first seating rib (373) extending from one end portion of the plug body (371); and
a second seating rib (374) extending from one end portion of the plug body (371) and formed opposite the first seating rib (373), and
wherein the first seating rib (373) extends longer than the second seating rib (374).

12. The sensor apparatus of claim 11, wherein a seating jaw (345,346) protrudes from the other end portion of the main board (34),
wherein the seating jaw (345,346) includes:
a first seating jaw (345) with which the first seating rib (373) is in contact, and
a second seating jaw (346) with which the second seating rib (374) is in contact, and
wherein the second seating jaw (346) protrudes longer than the first seating jaw (345).

13. The sensor apparatus of any one of claims 1 to 12, further comprising a conductive shielding cylinder surrounding at least a portion of the main board, between the main board and the lower housing.

14. The sensor apparatus of claim 13, further comprising a conductive layer (402) electrically connected to the conductive shielding cylinder (35a), between the main board (34) and the transducer (22).

15. The sensor apparatus of claim 13 or 14, further comprising a board cushion (41) mounted on an inner lower end of the shield cylinder (35a),
wherein the main board (34) includes ground terminals (341,342) electrically connected to the board cushion (41).
